# EUROPEAN PATENT APPLICATION

(11) **EP 4 730 488 A1**
(43) Date of publication of application: **22.04.2026**
(21) Application number: 24907786.8
(22) Date of filing: 08.11.2024
(51) Int. Cl.: H01M 10/6561, H01M 10/6566, H01M 10/627, H01M 50/244, H01M 50/251, B65D 88/02, B65D 90/00, B65D 88/74

(54) **CONTAINER MODULE**

(30) Priority: 22.12.2023 KR 20230190484
(71) Applicant: LG Energy Solution, Ltd., Seoul 07335 (KR)
(72) Inventor: YOON, Jong-Woong, Daejeon 34122 (KR); LEE, Yong-Tae, Daejeon 34122 (KR); MUN, Jeong-O, Daejeon 34122 (KR); PARK, Dong-Ho, Daejeon 34122 (KR); PARK, Jeong-Seok, Daejeon 34122 (KR); LEE, Hyo-Jin, Daejeon 34122 (KR); CHOI, Yeo-Joo, Daejeon 34122 (KR)
(74) Representative: Plasseraud IP
(86) International application number: PCT/KR2024/017614
(87) International publication number: WO 2025/135501

(57) **Abstract**

Disclosed is a container module. A container module according to an embodiment of the present disclosure may include a case providing an internal space and including a rear panel; a battery array including a plurality of battery packs positioned inside the case and stacked in the vertical direction; a cooling unit providing cooling air to the inside of the case; and a duct positioned inside the case and allowing a gap between the battery array and the rear panel to communicate with the cooling unit.

## Description

### TECHNICAL FIELD

The present disclosure relates to a container module.

This application is based on and claims priority from Korean Patent Application No. 10-2023-0190484, filed on December 22, 2023, with the Korean Intellectual Property Office, the disclosure of which is incorporated herein in its entirety by reference.

### BACKGROUND ART

Currently commercialized secondary batteries include nickel cadmium batteries, nickel hydrogen batteries, nickel zinc batteries, lithium secondary batteries, and the like, and among them, lithium secondary batteries are in the spotlight as they have advantages of free charge/discharge due to almost no memory effect compared to nickel-based secondary batteries, very low self-discharge rate, and high energy density.

Recently, as issues such as power shortage or eco-friendly energy have come to the fore, energy storage systems (ESSs) for storing generated power are attracting more attention. For example, a smart grid system has been proposed as one of the ways for adjusting the supply and demand of power. The amount of power consumed by consumers is not always constant and may fluctuate frequently. As a representative example, power consumption increases sharply due to the use of cooling systems in the afternoon during summer, and then decreases sharply at night. As such, in terms of power consumption, power consumption is not constant and may fluctuate frequently, but in terms of power supply, it is practically difficult to match such power consumption even if the amount of power produced is adjusted to some extent. Therefore, such an imbalance between the supply and demand of power may cause power oversupply or power shortage, and a smart grid system may flexibly store and adjust power to solve this problem. The smart grid system can be said to be a concept that stores power at times or regions where surplus power occurs, and supplies the stored power to times or regions where power shortage occurs. One of the key components for building this smart grid system can be said to be energy storage systems for storing power. Additionally, as electric vehicles have been commercialized in earnest recently, energy storage systems may also be utilized in facilities for charging electric vehicles, such as charging stations.

Such energy storage systems may include a plurality of battery containers. The number and arrangement of the battery containers may vary depending on various environments and requirements. To meet such requirements, there is an increasing need to configure battery containers as a combination of small modules to improve energy density and to be expandable in various forms.

### DISCLOSURE

### Technical Problem

The present disclosure is designed to solve the above-described problems and other problems.

Another object of the present disclosure may be to provide a container module with improved cooling performance.

Another object of the present disclosure may be to provide a container module with reduced cooling deviation according to an internal position of the container.

Another object of the present disclosure may be to provide a container module with improved assemblability.

Another object of the present disclosure may be to provide a container module having a simplified structure.

Another object of the present disclosure may be to provide a miniaturized container module.

### Technical Solution

A container module according to an embodiment of the present disclosure for achieving the above-described object may include a case providing an internal space and including a rear panel; a battery array including a plurality of battery packs positioned inside the case and stacked in the vertical direction; a cooling unit providing cooling air to the inside of the case; and a duct positioned inside the case and allowing a gap between the battery array and the rear panel to communicate with the cooling unit.

Additionally, the case may include a front panel, and the cooling unit may be installed on the front panel.

Additionally, the duct may be positioned above the battery array.

Additionally, the duct may include a front part communicating with the cooling unit and guiding the cooling air upward; and a rear part extending from the front part along the front-rear direction and guiding the cooling air in the front-rear direction.

Additionally, the duct may include an outlet that extends long along a gap between the battery array and the rear panel.

Additionally, the container module may further include a first flow guide that is positioned inside the duct, extends along the left-right direction, and guides the cooling air in a downward direction.

Additionally, the container module may further include a second flow guide that is positioned inside the duct, extends along the front-rear direction, and distributes the cooling air in the left-right direction.

Additionally, the case may include a side panel, wherein the container module may further include a side cover that is positioned between the side panel and the battery array and covers one side of the battery array.

Additionally, the container module may further include a rear cover that is positioned between the rear panel and the battery array, covers the rear of the battery array, and has a plurality of supply holes.

Additionally, the duct may communicate with a gap between the rear cover and the rear panel.

Additionally, the plurality of supply holes may include a first supply hole and a second supply hole positioned below the first supply hole, wherein the first supply hole may be formed larger than the second supply hole.

Additionally, the plurality of supply holes may include a third supply hole and a fourth supply hole positioned further inward than the third supply hole, wherein the third supply hole may be formed larger than the fourth supply hole.

A container system according to one aspect of the present disclosure includes a container module of the present disclosure.

An energy storage system according to one aspect of the present disclosure includes a container module of the present disclosure.

### Advantageous Effects

According to at least one of the embodiments of the present disclosure, the cooling performance of the container module may be improved.

According to at least one of the embodiments of the present disclosure, the cooling deviation according to an internal position of the container may be reduced.

According to at least one of the embodiments of the present disclosure, the energy density of the container module may be improved.

According to at least one of the embodiments of the present disclosure, the structure of the container module may be simplified.

According to at least one of the embodiments of the present disclosure, the container module may be miniaturized.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view showing a container module according to an embodiment of the present disclosure.
FIG. 2 is a view showing the plurality of columns of FIG. 1.
FIG. 3 is a view showing that covers are further coupled to the configuration of FIG. 2.
FIG. 4 is a view showing that brackets are further coupled to the configuration of FIG. 3.
FIGS. 5 and 6 are views showing the bracket of FIG. 4.
FIG. 7 is a view showing a cross-sectional configuration taken along the cutting line N-N' of FIG. 4.
FIG. 8 is a view showing that battery packs are further coupled to the configuration of FIG. 4.
FIG. 9 is a view showing a cross-sectional configuration taken along the cutting line J-J' of FIG. 8.
FIG. 10 is a view showing that a cooling unit and a duct are further coupled to the configuration of FIG. 8.
FIG. 11 is a view showing a portion of the configuration of FIG. 10 viewed from a different direction.
FIG. 12 is a view showing a cross-sectional configuration taken along the cutting line A-A' of FIG. 1.
FIG. 13 is an enlarged view of part B of FIG. 12.
FIG. 14 is an enlarged view of part C of FIG. 12.
FIG. 15 is an enlarged view of part D of FIG. 12.
FIG. 16 an enlarged view of part E of FIG. 12.
FIG. 17 is an enlarged view of part F of FIG. 12.
FIG. 18 is a view showing a cross-sectional configuration taken along the cutting line G-G' of FIG. 1.
FIG. 19 is a view showing a modified embodiment of FIG. 18.
FIG. 20 is a view showing another modified embodiment of FIG. 18.
FIG. 21 is a view showing a cross-sectional configuration taken along the cutting line H-H' of FIG. 1.
FIG. 22 is a view showing the configuration of FIG. 21 viewed from a different direction.
FIG. 23 is a view showing a cross-sectional configuration taken along the cutting line I-I' of FIG. 1.
FIG. 24 is an enlarged view of part K of FIG. 23.
FIG. 25 is an enlarged view of part M of FIG. 23.
FIG. 26 is a view showing a container according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

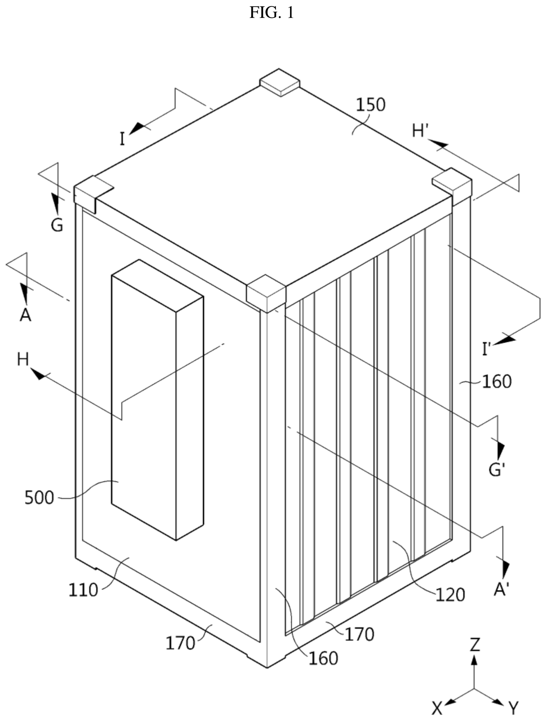

FIG. 1 is a view showing a container module according to an embodiment of the present disclosure. Referring to FIG. 1, the case 100 may provide a space therein. The case 100 may form the exterior of a container module. The case 100 may have a cuboidal shape. The case 100 may include a front panel 110, a rear panel 130, a top panel 150, a bottom panel 140, and a side panel 120. The side panel 120 may be provided in a pair.

The front panel 110 may have a cooling unit 500. For example, the cooling unit 500 may be a heat exchanger such as an HVAC, a chiller, a cooler, or the like. The cooling unit 500 may adjust the temperature of a cooling fluid flowing inside the case 100. For example, the cooling unit 500 may supply or circulate cooling air CA to the inside of the case 100.

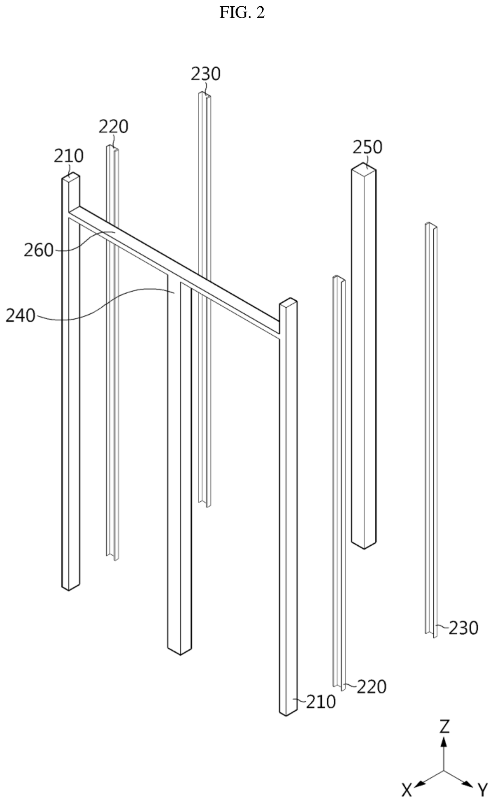

FIG. 2 is a view showing the plurality of columns of FIG. 1. Referring to FIG. 2, the container module may include a side front column 210, a side middle column 220, and a side rear column 230. The side front column 210, the side middle column 220, and the side rear column 230 may be sequentially positioned along the front-rear direction or the X-axis direction. The side front column 210, the side middle column 220, and the side rear column 230 may each be provided in a pair.

Additionally, the container module may include a center front column 240 and a rear front column. The center front column 240 and the rear front column may be sequentially positioned along the front-rear direction or the X-axis direction.

Additionally, the container module may include a reinforcing beam 260. The reinforcing beam 260 may extend along the left-right direction or the Y-axis direction. The reinforcing beam 260 may connect a pair of side front columns 210.

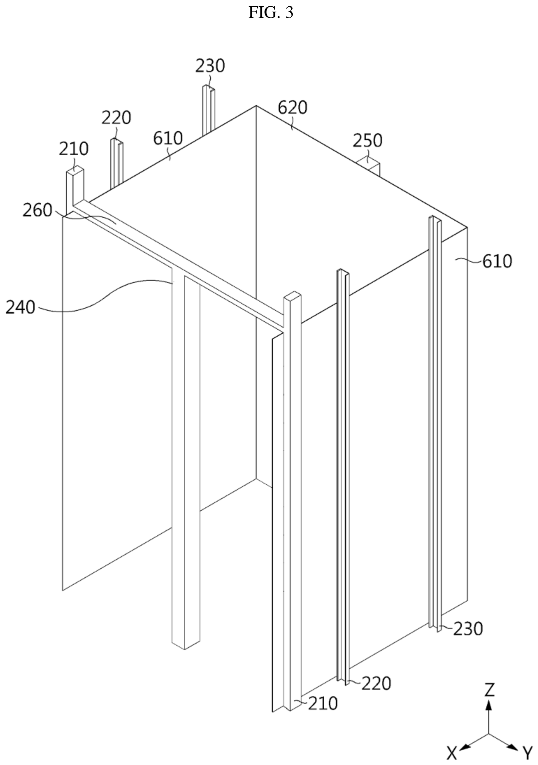

FIG. 3 is a view showing that covers are further coupled to the configuration of FIG. 2. Referring to FIG. 3, the container module may include an inner cover 630, a side cover 610, and a rear cover 620. The side covers 610 may be provided in a pair. The side cover 610 may be coupled to or in contact with at least one of the side front column 210, the side middle column 220, or the side rear column 230.

The rear cover 620 may be coupled to or in contact with the middle rear column 250. The rear cover 620 may connect or couple the pair of side covers 610. The pair of side covers 610 and the rear cover 620 may form a space therein.

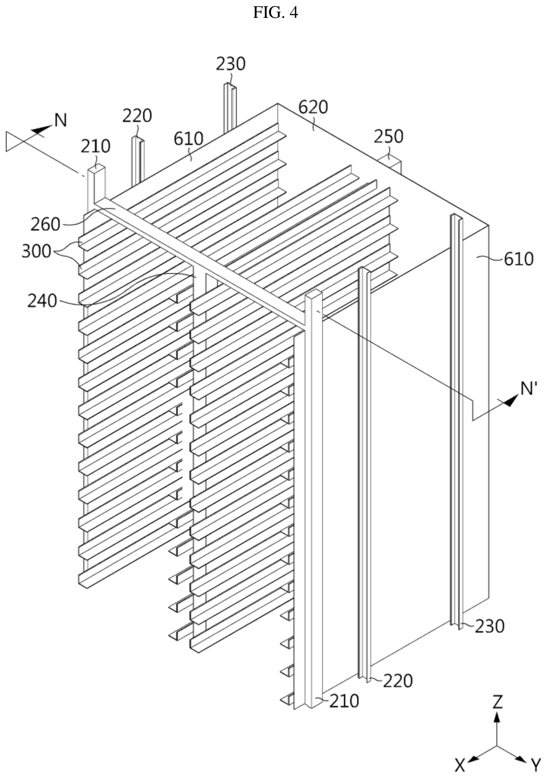

FIG. 4 is a view showing that brackets 300 are further coupled to the configuration of FIG. 3. Referring to FIG. 4, the bracket 300 may extend along the front-rear direction or the X-axis direction. The bracket 300 may be provided in plurality. The plurality of brackets 300 may be arranged along the vertical direction or the Z-axis direction. Additionally, the plurality of brackets 300 may be arranged along the left-right direction or the Y-axis direction.

The bracket 300 may be coupled to or in contact with at least one of the side cover 610, the side front column 210, the side middle column 220, or the side rear column 230.

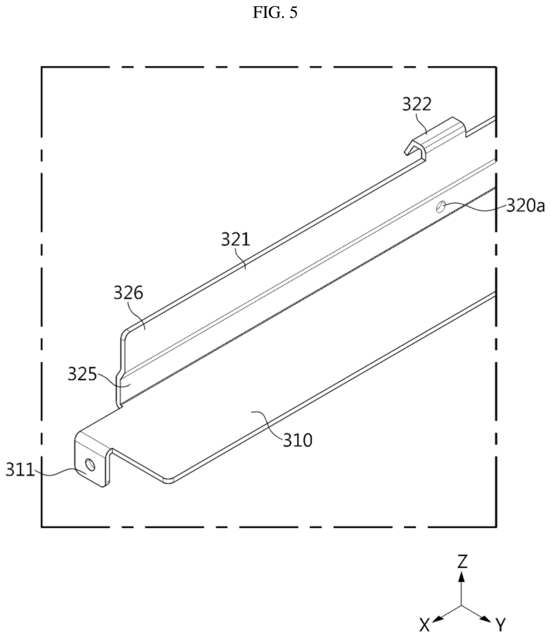

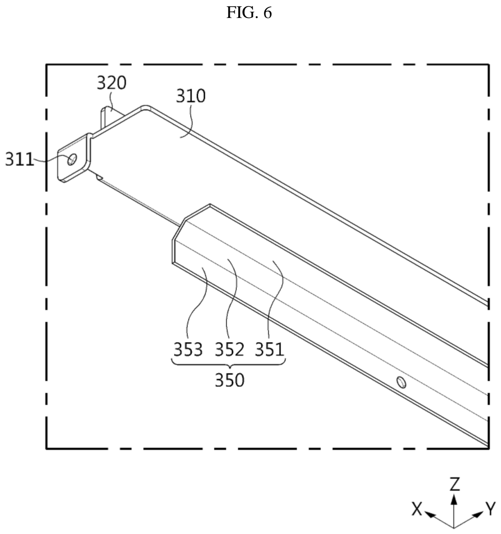

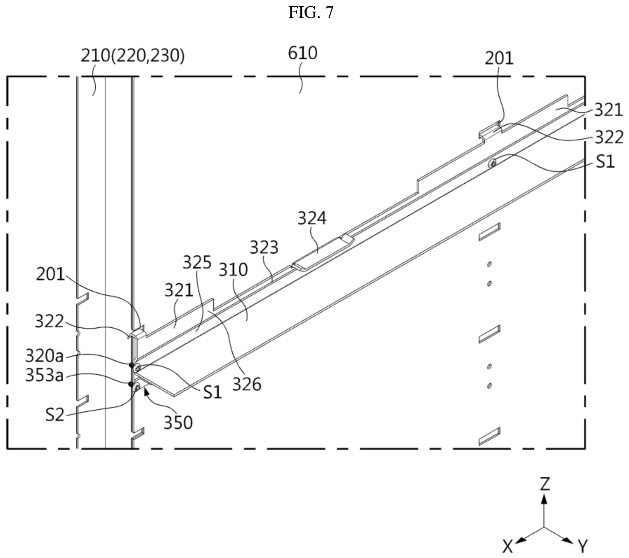

FIGS. 5 and 6 are views showing the bracket 300 of FIG. 4. FIG. 7 is a view showing a cross-sectional configuration taken along the cutting line N-N' of FIG. 4. Referring to FIGS. 5 to 7, the bracket 300 of the container module according to an embodiment of the present disclosure may include a horizontal portion 310, a vertical portion 320, and a support 350.

The horizontal portion 310 may extend long along the front-rear direction or the Y-axis direction. The horizontal portion 310 and the stopper 312 may be formed integrally. The horizontal portion 310 may include a first fixing part 311 at the front. The first fixing part 311 may be formed by a part of the horizontal portion 310 being curved or bent downward. The first fixing part 311 and the stopper 312 may be formed integrally. The first fixing part 311 may include a through hole formed in the front-rear direction.

The vertical portion 320 may extend long along the front-rear direction or the Y-axis direction. The vertical portion 320 may extend upward from the horizontal portion 310. The vertical portion 320 may be formed by a part of the horizontal portion 310 being curved or bent upward. The vertical portion 320 and the horizontal portion 310 may be formed to form an angle of approximately 90 degrees. The vertical portion 320 and the horizontal portion 310 may be formed integrally. Additionally, the vertical portion 320 may form a step and extend upward.

The vertical portion 320 may include a first part 325 and a second part 326. The first part 325 may extend from the horizontal portion 310. The second part 326 may extend from the first part 325. The first part 325 and the second part 326 may be formed long along the front-rear direction or the Y-axis direction, respectively. The first part 325 and the second part 326 may be formed to be stepped. The second part 326 may be formed to be stepped inward from the first part 325 or in a direction in which the horizontal portion 310 is formed. The second part 326 may be formed by a portion of the first part 325 being curved or bent upward. The first part 325 and the second part 326 may be formed integrally.

The second part 326 may include irregularities. The second part 326 may include a concave part 323 and a convex part 321. The second part 326 may include a plurality of concave parts 323 and convex parts 321. The concave part 323 and the convex part 321 may be alternately disposed along the front-rear direction or the Y-axis direction. The convex part 321 may include a hook 322. The hook 322 may be formed on the outside of the second part 326. The hook 322 may be provided for each convex part 321. The first part 325 may include a plurality of first fastening holes 320a. The first fastening holes 320a may be positioned below the hooks 322. The first fastening holes 320a may be provided to correspond one-to-one to the hooks 322. The concave part 323 may include a second fixing part 324. The second fixing part 324 may be formed on the inside of the second part 326. The second fixing part 324 may be provided for each concave part 323. The second fixing part 324 may be formed by a portion of the concave part 323 being curved or bent inward. The second fixing part 324 and the concave part 323 may be formed to form an angle of approximately 90 degrees. The second fixing part 324 and the concave part 323 may be formed integrally.

The support 350 may include a horizontal support 351. The horizontal support 351 may extend long along the front-rear direction or the Y-axis direction. The horizontal support 351 may be coupled, fixed, or attached to the lower surface of the horizontal portion 310. For example, the horizontal support 351 may be coupled to the lower surface of the horizontal portion 310 by welding. The length of the horizontal support 351 in the front-rear direction may be configured to be shorter than the length of the horizontal portion 310 in the front-rear direction. Additionally, the width of the horizontal support 351 in the left-right direction or the length in the Y-axis direction may be formed to be shorter than the width of the horizontal portion 310 in the left-right direction or the length in the Y-axis direction. For example, the width of the horizontal support 351 in the left-right direction may be formed to be less than half of the width of the horizontal portion 310 in the left-right direction.

The support 350 may include a vertical support 353. The vertical support 353 may extend long along the front-rear direction or the Y-axis direction. The vertical support 353 and the horizontal support 351 may be formed to form an angle of approximately 90 degrees. The horizontal support 351 and the vertical support 353 may be formed integrally. The vertical support 353 may include a plurality of second fastening holes 353a. The second fastening holes 353a may be positioned below the hooks 322. The second fastening holes 353a may be provided to correspond one-to-one to the hooks 322. The vertical support 353 may be formed by a part of the horizontal support 351 being curved or bent downward. The horizontal support 351 and the vertical support 353 may be formed integrally.

A connection 352 may connect the horizontal support 351 and the vertical support 353. The connection 352 may extend long along the front-rear direction or the Y-axis direction. The connection 352 may be formed to be inclined. The connection 352 may be referred to as a truss part 352. The connection 352 may be formed by a part of the horizontal support 351 being curved or bent downward obliquely. Alternatively, the connection 352 may be formed by a part of the vertical support 353 being curved or bent inward obliquely. The horizontal support 351, the connection 352, and the vertical support 353 may be formed integrally.

The column 200 may have a catch hole 201. Additionally, the side cover 610 may have a catch hole 611. The hook 322 of the bracket 300 may be caught in the catch holes 201, 611. Additionally, the first fastening member S1 may fasten, couple, or fix the first part 325 to the column 200 and the side cover 610 through the first fastening hole 320a of the first part 325. Additionally, the second fastening member S2 may fasten, couple, or fix the vertical support 353 to the column 200 and the side cover 610 through the second fastening hole 353a of the vertical support 353.

Since the second part 326 is formed to be stepped inward with respect to the first part 325, the hook 322 of the bracket 300 may be caught in the column 200 and the side cover 610, and may press the first part 325 against the side cover 610. Since the hook 322 is caught in the column 200 and the side cover 610, the approximate position of the bracket 300 may be aligned, and the bracket 300 may be fixed using the fastening members S1, S2. Due to the step and the hook 322 of the second part 326, the convenience of assembling the bracket 300 may be improved. The vertical portion 320 and the horizontal support 351 may be positioned on substantially the same plane.

The brackets 300 may be paired and coupled to the column 200 and the side cover 610. The pair of brackets 300 may be arranged in the left-right direction or the Y-axis direction. The pair of brackets 300 may be positioned at substantially the same height.

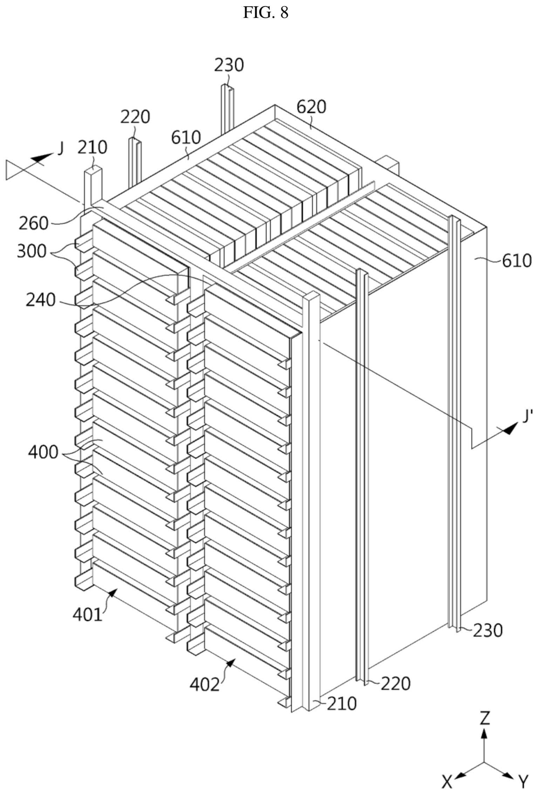

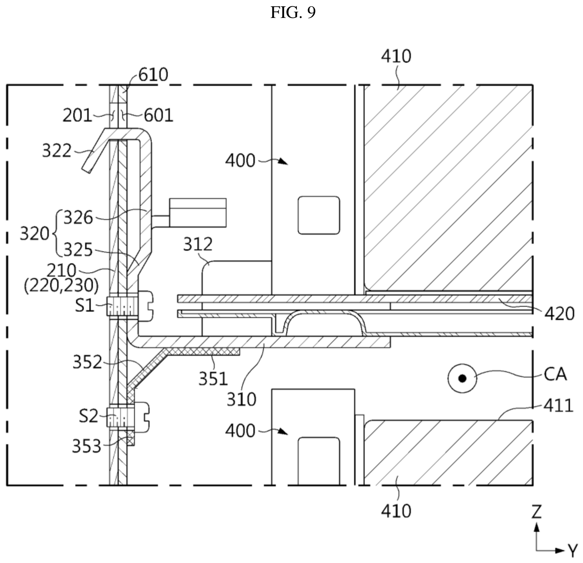

FIG. 8 is a view showing that battery packs 400 are further coupled to the configuration of FIG. 4. FIG. 9 is a view showing a cross-sectional configuration taken along the cutting line J-J' of FIG. 8. Referring to FIGS. 8 and 9, the container module may include a plurality of battery packs 400. The battery pack 400 may be positioned, installed, fastened, coupled, or fixed on top of the bracket 300. The battery pack 400 may include a plurality of battery cells 410. At this time, the battery cell 410 may refer to a secondary battery. The battery pack 400 may be provided in plurality. The battery pack 400 may have a cuboidal shape.

Additionally, the battery pack 400 may include a base plate 420 and a plurality of battery cells 410. The plurality of battery cells 410 may be positioned, installed, fixed, or coupled on top of the base plate 420. The plurality of battery cells 410 may be positioned with an upper surface thereof exposed. As a result, the plurality of battery cells 410 may be directly exposed to the cooling air CA, and the cooling efficiency of the battery pack 400 may be increased. At this time, the cooling air CA may flow along a forward direction or the +X-axis direction (a direction exiting through the ground).

The pair of brackets 300 may be fastened and coupled to one battery pack 400. Alternatively, the pair of brackets 300 may mount one battery pack 400. The horizontal portion 310 of the left bracket 300 of the pair of brackets 300 may extend to the right or in the +Y-axis direction. Additionally, the horizontal portion 310 of the right bracket 300 of the pair of brackets 300 may extend to the left or in the -Y-axis direction. The battery pack 400 may be installed by being placed on the horizontal portion 310 of the pair of brackets 300 and being pushed rearward.

The first battery array 401 may include a plurality of battery packs 400 positioned inside the case 100 and stacked in the vertical direction or the Z-axis direction.

The second battery array 402 may include a plurality of battery packs 400 positioned inside the case 100 and stacked in the vertical direction or the Z-axis direction. The second battery array 402 may be spaced apart from the first battery array 401 in the left-right direction. The second battery array 402 may be positioned on the right side of the first battery array 401.

The first battery array 401 and the second battery array 402 may be collectively referred to as battery arrays 401, 402.

The battery pack 400 may have a large weight. As a result, the weight applied to the bracket 300 may also be large. The bracket 300 may have the support 350, thereby maintaining rigidity even under a high load and stably supporting the battery pack 400.

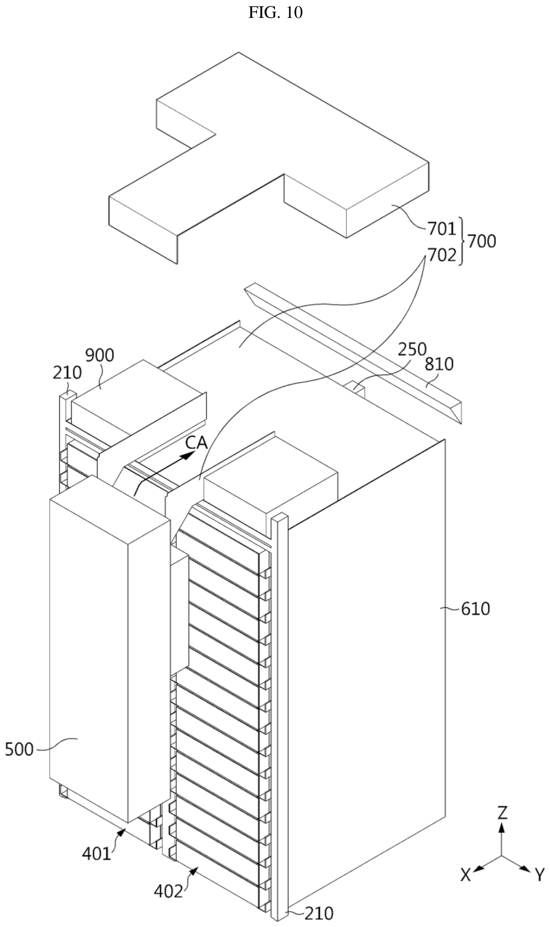

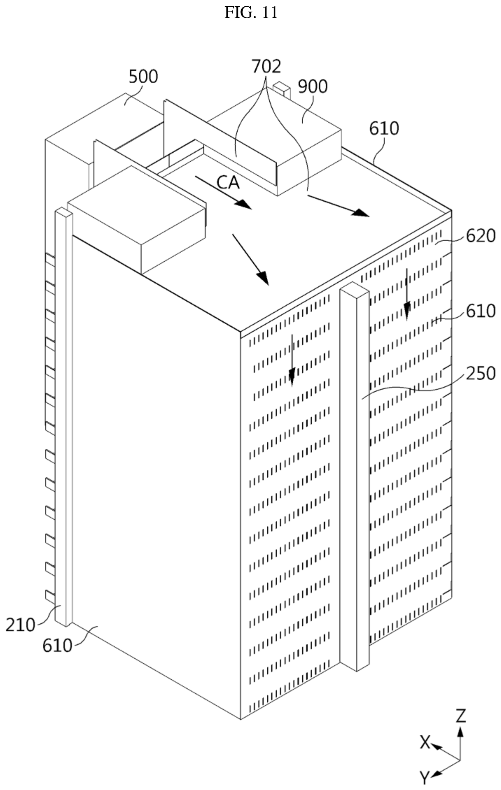

FIG. 10 is a view showing that a cooling unit 500 and a duct 700 are further coupled to the configuration of FIG. 8. FIG. 11 is a view showing a portion of the configuration of FIG. 10 viewed from a different direction. Referring to FIGS. 1, 8, 10, and 11, a container module according to an embodiment of the present disclosure may include a case 100, battery arrays 401, 402, a cooling unit 500, and a duct 700.

The cooling unit 500 may provide cooling air CA to the inside of the case 100. The duct 700 may be positioned inside the case 100. The duct 700 may extend along the front-rear direction or the X-axis direction. The duct 700 may provide a flow path therein. The duct 700 may communicate with the cooling unit 500. Additionally, the duct 700 may communicate with a gap between the rear panel 130 and the battery arrays 401, 402. The duct 700 may allow a gap between the rear panel 130 and the battery arrays 401, 402 to communicate with the cooling unit 500.

According to this configuration of the present disclosure, the cooling performance of the container module may be improved. The cooling air CA provided by the cooling unit 500 may be supplied to the rear of the battery arrays 401, 402 along the duct 700. The cooling air CA may be recovered to the cooling unit 500 after heat exchange with the plurality of battery cells 410. The cooling air CA may be circulated in a closed system.

Referring to FIGS. 1, 8, 10, and 11, the front panel 110 of the container module according to an embodiment of the present disclosure may face the first battery array 401 and the second battery array 402. And, the cooling unit 500 may be installed on the front panel 110.

According to this configuration of the present disclosure, the cooling performance of the container module may be improved. The first battery array 401 and the second battery array 402 are disposed symmetrically, and the cooling unit 500 is positioned between the first battery array 401 and the second battery array 402 and supplies the cooling air CA, so that the flow of the cooling air CA may be symmetrically and evenly supplied.

Referring to FIGS. 1, 8, 10, and 11, the duct 700 of the container module according to an embodiment of the present disclosure may be positioned above the battery arrays 401, 402. The duct 700 may include an upper part 701 and a lower part 702. The lower part 702 may be positioned above the battery arrays 401, 402. The upper part 701 may be coupled on top of the lower part 702.

Alternatively, the upper part 701 may be replaced with the top panel 150 of the case 100. At this time, the lower part 702 may be coupled, fixed, attached, or fastened to the inner surface of the top panel 150. And, the top panel 150 and the lower part 702 may be coupled, thereby functioning as a duct 700.

According to this configuration of the present disclosure, the cooling efficiency of the container module may be improved. The cooling air CA may be supplied to the uppermost battery pack 400 of the battery arrays 401, 402 due to the duct 700 positioned above the battery arrays 401, 402.

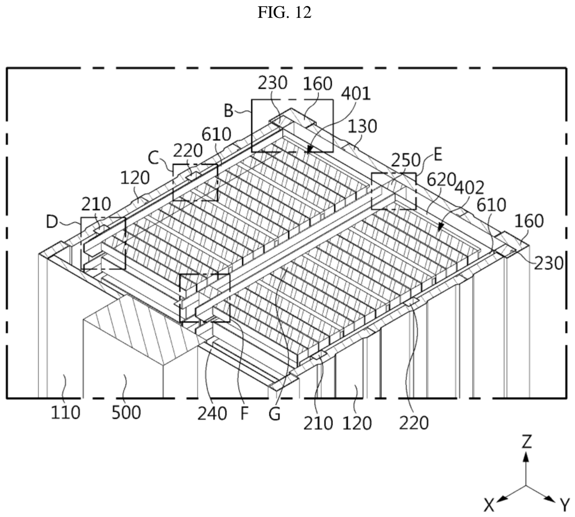

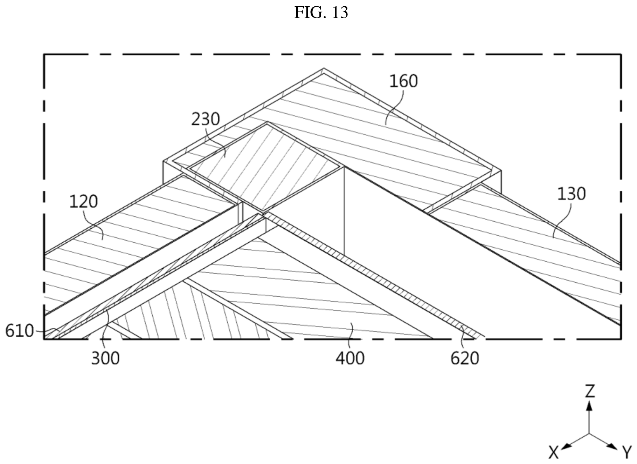

FIG. 12 is a view showing a cross-sectional configuration taken along the cutting line A-A' of FIG. 1. FIG. 13 is an enlarged view of part B of FIG. 12. Referring to FIGS. 12 and 13, corner columns 160 may be composed of four columns. The corner column 160 may extend along the vertical direction or the Z-axis direction. The corner column 160 may be positioned at a corner where the side panel 120 and the rear panel 130 meet. Additionally, the corner column 160 may be positioned at a corner where the side panel 120 and the front panel 110 meet. The corner columns 160 may form the exterior of the container module.

The side rear column 230 may be provided in a pair. The side rear column 230 may be positioned inside the case 100. The side rear column 230 may extend along the vertical direction or the Z-axis direction. The side rear column 230 may support the corner column 160. Additionally, the side rear column 230 may be in contact with the corner column 160. Additionally, the side rear column 230 may be coupled, fastened, fixed, or attached to the corner column 160. For example, the side rear column 230 may be coupled to the inner surface of the corner column 160 by welding.

The side cover 610 may have a rectangular shape. Additionally, the side cover 610 may have a plate shape. And, the side cover 610 may include a metal material. The rear end or rear side of the side cover 610 may be in contact with or coupled to the side rear column 230.

Additionally, the rear cover 620 may have a rectangular shape. Additionally, the rear cover 620 may have a plate shape. And, the rear cover 620 may include a metal material. The left end or the left side of the rear cover 620 may be in contact with or coupled to at least one of the side rear column 230 or the side cover 610.

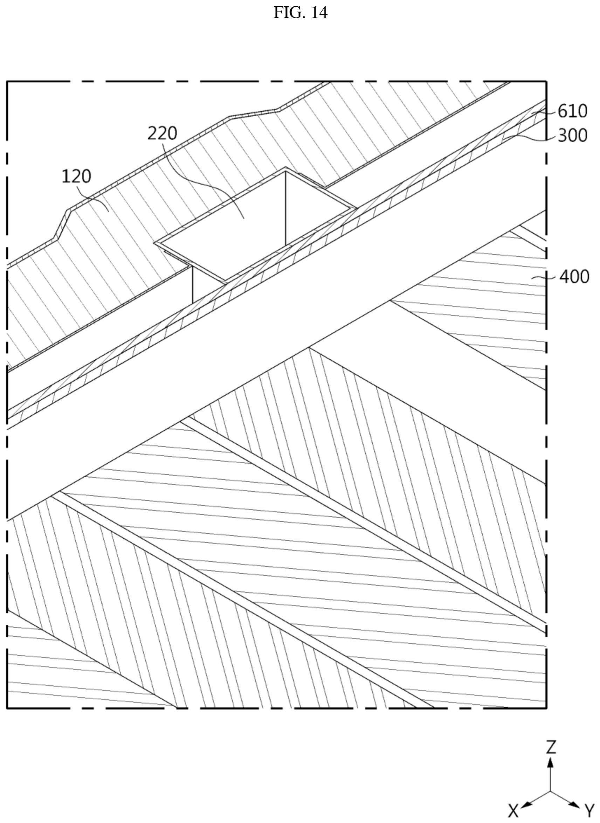

FIG. 14 is an enlarged view of part C of FIG. 12. Referring to FIG. 14, the side cover 610 may be in contact with or coupled to the side middle column 220. Alternatively, the side middle column 220 may be positioned between the side cover 610 and the side panel 120.

The side panel 120 may include a groove formed on the inner surface. The groove may extend along the vertical direction or the Z-axis direction. And, the side middle column 220 may be accommodated or positioned in the groove.

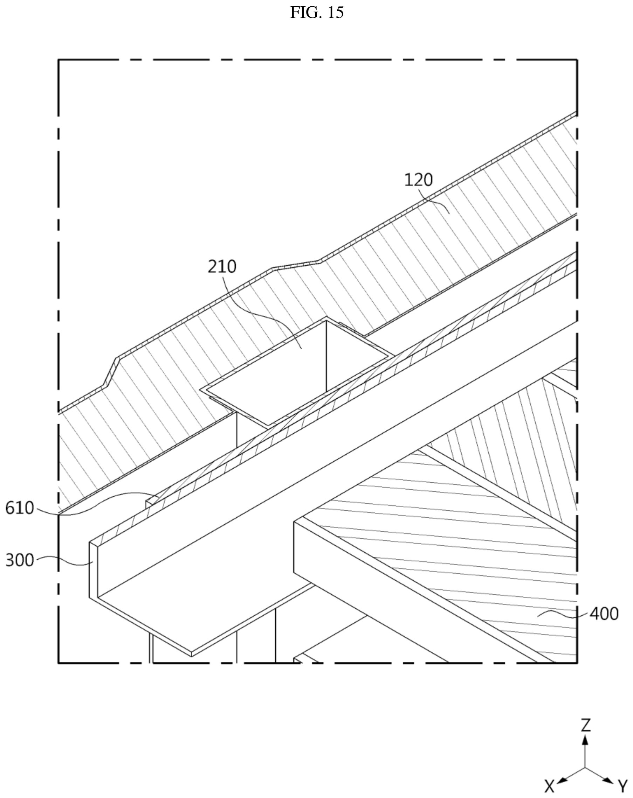

FIG. 15 is an enlarged view of part D of FIG. 12. Referring to FIG. 15, the side cover 610 may be in contact with or coupled to the side front column 210. Alternatively, the side front column 210 may be positioned between the side cover 610 and the side panel 120.

The side panel 120 may include a groove formed on the inner surface. The groove may extend along the vertical direction or the Z-axis direction. And, the side front column 210 may be accommodated or positioned in the groove.

Referring to FIGS. 11 to 14, the side cover 610 of the container module according to an embodiment of the present disclosure is positioned between the side panel 120 and the first battery array 401, and may cover the left side of the first battery array 401. Additionally, the side cover 610 is positioned between the side panel 120 and the second battery array 402, and may cover the right side of the second battery array 402.

According to this configuration of the present disclosure, the cooling efficiency of the container module may be improved. The side cover 610 may block the cooling air CA from exchanging heat with the side panel 120. Additionally, the side cover 610 may guide the cooling air CA introduced into the first battery array 401 or the second battery array 402 to flow toward the front side while exchanging heat with the battery cell 410.

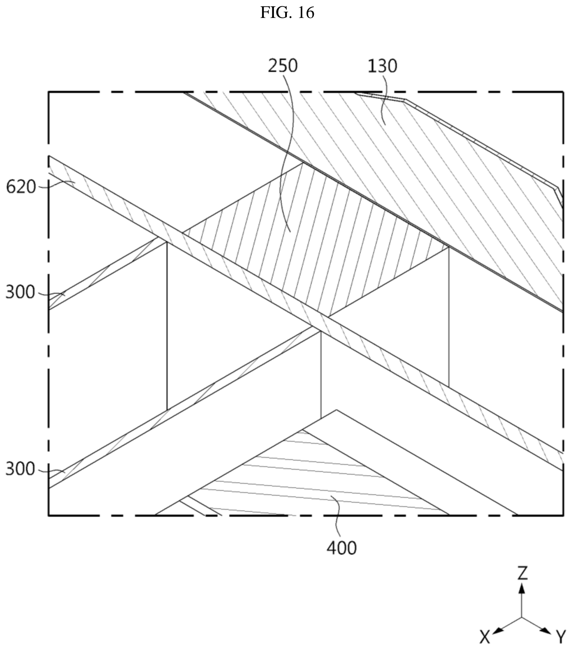

FIG. 16 an enlarged view of part E of FIG. 12. Referring to FIG. 16, the rear cover 620 of the container module according to an embodiment of the present disclosure may be in contact with or coupled to the center rear column 250. Alternatively, the center rear column 250 may be positioned between the rear cover 620 and the rear panel 130. The center rear column 250 may be in contact with, fixed to, or coupled to the rear panel 130. The rear cover 620 may cover the rear of the second battery array 402. Additionally, the rear cover 620 may cover the rear of the first battery array 401. And, the rear cover 620 may have a plurality of supply holes 621. The plurality of supply holes 621 may be arranged along the left-right direction or the Y-axis direction. Additionally, the plurality of supply holes 621 may be arranged along the vertical direction or the Z-axis direction.

According to this configuration of the present disclosure, the cooling efficiency of the container module may be improved. The rear cover 620 may have a plurality of supply holes 621, so that the cooling air CA may be appropriately distributed and supplied according to the flow rate of the cooling air CA, the momentum of the cooling air CA, the heat distribution of the battery arrays 401, 402, and the like.

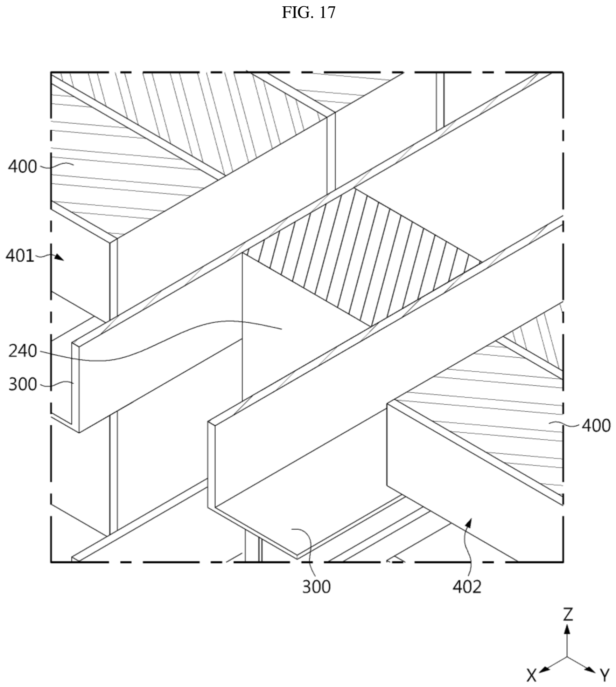

FIG. 17 is an enlarged view of part F of FIG. 12. Referring to FIG. 17, the bracket 300 may be coupled, fastened, fixed, and attached to the center front column 240. The bracket 300 may be coupled to the left and right sides of the center front column 240, respectively.

According to this configuration of the present disclosure, the center front column 240 is coupled to the case 100 of the container module, so that a rack frame for installing the bracket 300 may not be required. As a result, the structure of the container module may be simplified and the energy density may be increased.

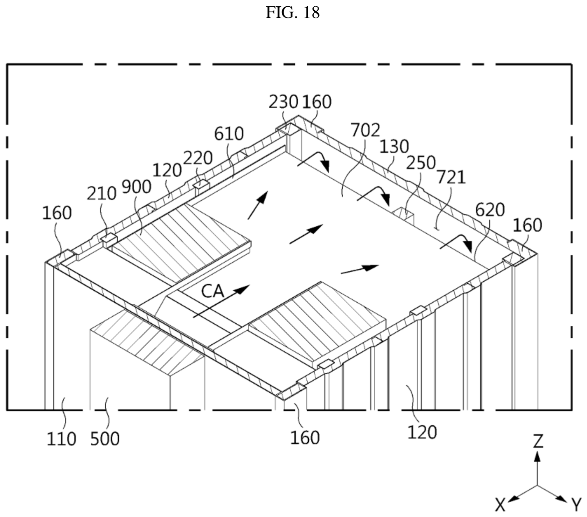

FIG. 18 is a view showing a cross-sectional configuration taken along the cutting line G-G' of FIG. 1. Referring to FIGS. 11, 16, and 18, the duct 700 of the container module according to an embodiment of the present disclosure may communicate with a gap between the rear cover 620 and the rear panel 130. The cooling air CA may pass through the duct 700 and be diffused along the left-right direction or the Y-axis direction. Then, the diffused cooling air CA may be discharged into the gap between the rear cover 620 and the rear panel 130.

According to this configuration of the present disclosure, the cooling uniformity of the container module may be improved. As the cooling air CA is diffused along the left-right direction or the Y-axis direction, the cooling air CA may be supplied evenly.

Referring to FIGS. 11, 16, and 18, the duct 700 of the container module according to an embodiment of the present disclosure may include an outlet 721 that extends long along the gap between the battery arrays 401, 402 and the rear panel 130. Alternatively, the outlet 721 may extend long along an upper edge of the rear cover 620.

According to this configuration of the present disclosure, the cooling uniformity of the container module may be improved. As the cooling air CA is diffused along the left-right direction or the Y-axis direction through the outlet 721, the cooling air CA may be supplied evenly.

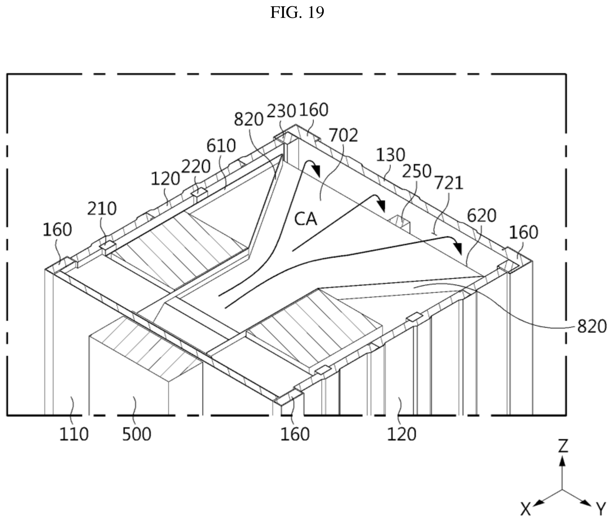

FIG. 19 is a view showing a modified embodiment of FIG. 18. Referring to FIG. 19, the container module according to an embodiment of the present disclosure may include a flow guide 820. At this time, the flow guide 820 may be referred to as a third flow guide 820. The flow guide 820 may extend along the front-rear direction or the X-axis direction. And, the flow guide 820 may be provided in a pair. The flow guide 820 may guide the cooling air CA to be diffused along the left-right direction or the Y-axis direction. Additionally, the flow guide 820 may limit the diffusion range of the cooling air CA.

According to this configuration of the present disclosure, the cooling uniformity of the container module may be improved. As the cooling air CA is diffused along the left-right direction or the Y-axis direction, the cooling air CA may be supplied evenly.

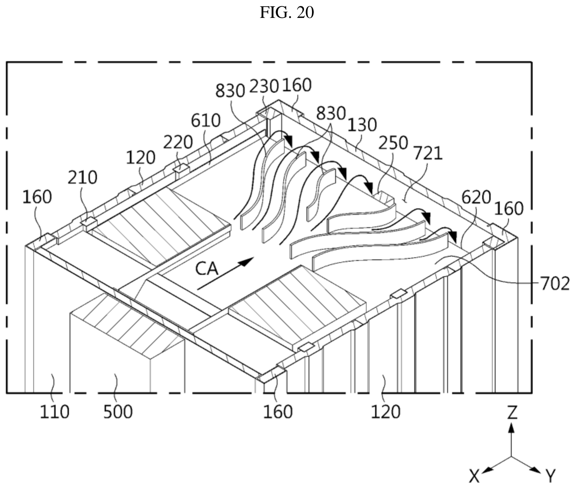

FIG. 20 is a view showing another modified embodiment of FIG. 18. Referring to FIG. 20, a container module according to an embodiment of the present disclosure may include a flow guide 830. At this time, the flow guide 830 may be referred to as a second flow guide 830. The flow guide 830 may extend along the front-rear direction or the X-axis direction. And, the flow guide 830 may be provided in plurality. The flow guide 830 may guide the cooling air CA to be diffused and distributed along the left-right direction or the Y-axis direction.

According to this configuration of the present disclosure, the cooling uniformity of the container module may be improved. The cooling air CA discharged from the cooling unit 500 may have a momentum to move along a rearward direction or -X-axis direction, and diffusion along the left-right direction or the Y-axis direction may be suppressed. The flow guide 830 may distribute the flow so that the cooling air CA is diffused along the left-right direction or the Y-axis direction.

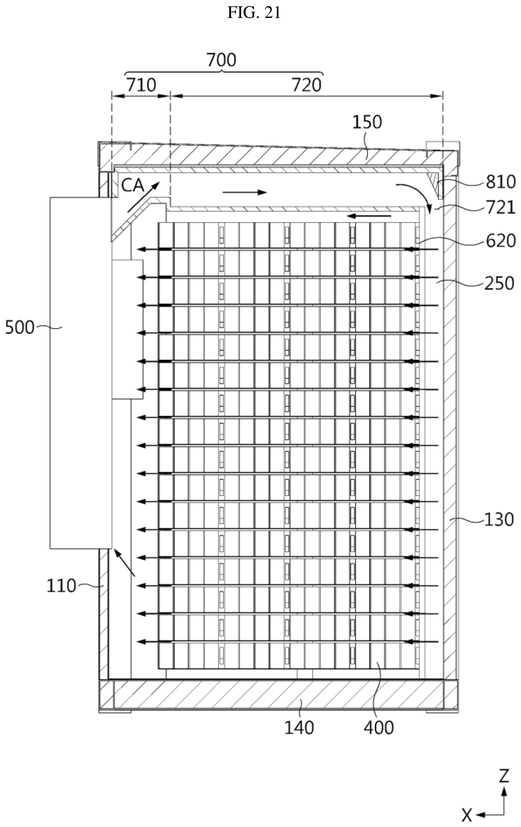

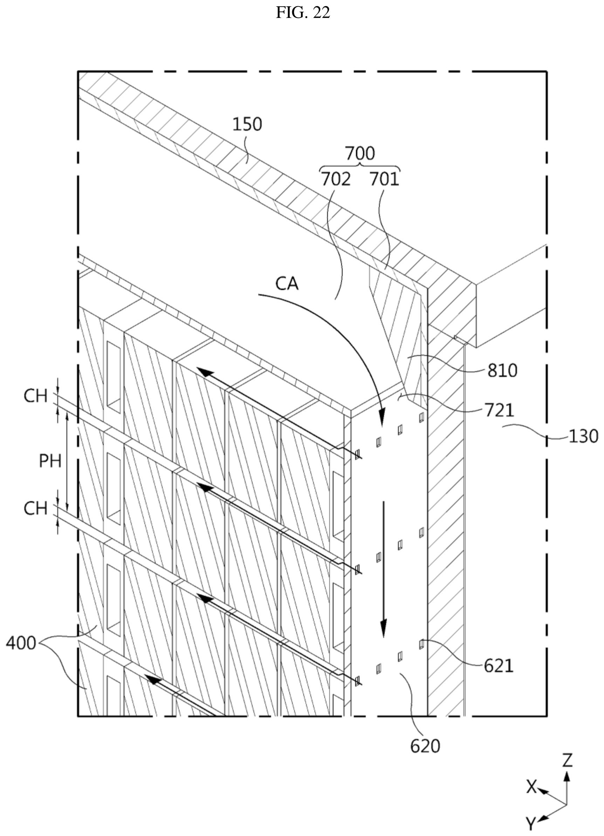

FIG. 21 is a view showing a cross-sectional configuration taken along the cutting line H-H' of FIG. 1. FIG. 22 is a view showing the configuration of FIG. 21 viewed from a different direction. Referring to FIGS. 21 and 22, the duct 700 of the container module according to an embodiment of the present disclosure may include a front part 710 and a rear part 720. The front part 710 may communicate with the cooling unit 500. And, the front part 710 may guide the cooling air CA supplied from the cooling unit 500 along an upward direction or the Z-axis direction. The front part 710 may guide the cooling air CA to be positioned higher than the first battery array 401 or the second battery array 402. The front part 710 may extend along the front-rear direction or the X-axis direction.

The rear part 720 may extend from the front part 710. The rear part 720 may extend from the front part 710 along the front-rear direction or the -X-axis direction. The rear part 720 may guide the cooling air CA in the front-rear direction or the -X-axis direction.

According to this configuration of the present disclosure, the cooling efficiency of the container module may be improved. The cooling air CA may be positioned higher than the first battery array 401 or the second battery array 402 along the duct 700. As a result, the cooling air CA may be supplied to the uppermost battery pack 400 of the first battery array 401 or the second battery array 402.

Referring to FIGS. 10, 21, and 22, the battery pack 400 of the container module according to an embodiment of the present disclosure may have a height PH. And, the plurality of battery packs 400 may be stacked along the vertical direction or the Z-axis direction with a spacing CH. The spacing CH between neighboring battery packs 400 may function as a channel through which the cooling air CA moves. At this time, the height CH of the channel may be configured to be about 5 to 15% of the height PH of the battery pack 400. Preferably, the height CH of the channel may be configured to be about 10% of the height PH of the battery pack 400. For example, when the height CH of the battery pack 400 is configured to be 123.5 mm, the spacing CH between neighboring battery packs 400 may be configured to be 12 mm.

According to this configuration of the present disclosure, the height CH of the channel is configured to be smaller than the height PH of the battery pack 400, so that the pressure, flow rate, or momentum of the cooling air CA may be appropriately maintained. As a result, the cooling efficiency of the container module may be improved.

Additionally, the height CH of the channel is configured to be smaller than the height PH of the battery pack 400, so that more battery packs 400 may be mounted in the container module, and the energy density of the container module may be improved. Alternatively, the height CH of the channel is configured to be smaller than the height PH of the battery pack 400, so that the container module may be miniaturized.

Referring to FIGS. 10, 21, and 22, the container module according to an embodiment of the present disclosure may include a flow guide 810. At this time, the flow guide 810 may be referred to as a first flow guide 810. The flow guide 810 may extend along the left-right direction or the Y-axis direction. The flow guide 810 may guide the cooling air CA moving rearward in a downward direction or the -Z-axis direction.

The flow guide 810 may be positioned inside the duct 700. The flow guide 810 may be positioned at the upper corner region on the rear side of the duct 700. Additionally, the flow guide 810 may be coupled, fastened, fixed, or attached to the inside of the duct 700.

Alternatively, the flow guide 810 may be positioned at a corner region where the top panel 150 and the rear panel 130 meet. The flow guide 810 may be coupled, fastened, fixed, or attached to at least one of the top panel 150 or the rear panel 130.

According to this configuration of the present disclosure, the cooling uniformity of the container module may be improved. The cooling air CA discharged from the cooling unit 500 may have a momentum to move along a rearward direction or the -X-axis direction. The flow guide 830 may guide the cooling air CA moving rearward in a downward direction or the -Z-axis direction.

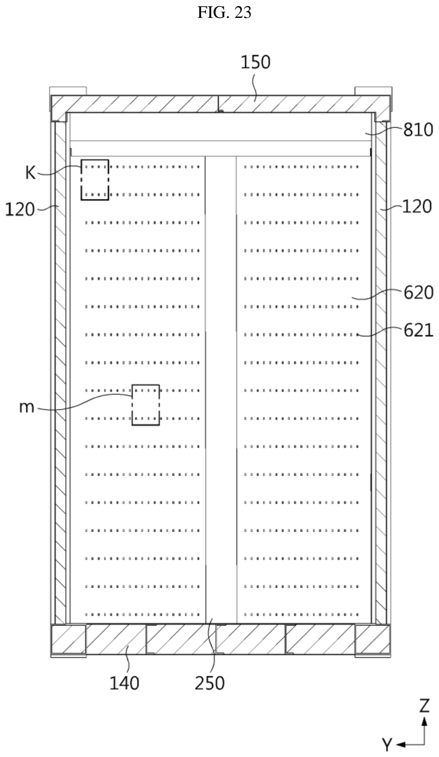

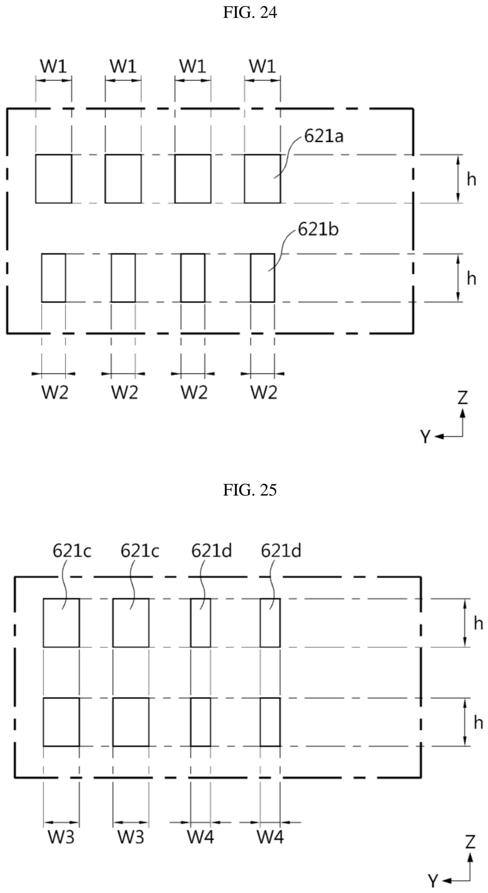

FIG. 23 is a view showing a cross-sectional configuration taken along the cutting line I-I' of FIG. 1. FIG. 24 is an enlarged view of part K of FIG. 23. Referring to FIGS. 23 and 24, the rear cover 620 may include a plurality of supply holes 621. The plurality of supply holes 621 may be arranged at regular intervals along the left-right direction or the Y-axis direction. Additionally, the plurality of supply holes 621 may be arranged at regular intervals along the vertical direction or the Z-axis direction.

The rear cover 620 may include a part where the diameter of the supply hole 621 decreases as it goes in a downward direction or the -Z-axis direction. The part K indicates that the diameter of the supply hole 621 decreases as it goes in a downward direction or the -Z-axis direction. The four first supply holes 621a may be configured to have a length of w1 in the left-right direction and a height of h. And, the four second supply holes 621b positioned below the first supply holes 621a may be configured to have a length of w2 in the left-right direction and a height of h. The length w1 may be configured to be longer than the length w2.

The cooling air CA may have a momentum to move in a downward direction by the flow guide 810. As a result, the amount of cooling air CA supplied to the lower supply hole 621b may be increased. The rear cover 620 may include the part K, thereby evenly distributing the flow rate of the cooling air CA supplied to the battery pack 400.

FIG. 25 is an enlarged view of part M of FIG. 23. Referring to FIGS. 23 and 25, the rear cover 620 may include a part where the diameter of the supply hole 621 decreases as it goes in an inward direction or toward the center rear column. The part M indicates that the diameter of the supply hole 621 decreases as it goes in an inward direction or the - Y-axis direction. The four third supply holes 621c may be configured to have a length of w3 in the left-right direction and a height of h. And, the four fourth supply holes 621d positioned in a further inward direction than the third supply hole 621c or the -Y-axis direction may be configured to have a length of w4 in the left-right direction and a height of h. The length w3 may be configured to be longer than the length w4.

A part where the flow rate is not uniformly distributed may occur due to the flow of cooling air CA. The rear cover 620 may include the part M, thereby evenly distributing the flow rate of the cooling air CA supplied to the battery pack 400.

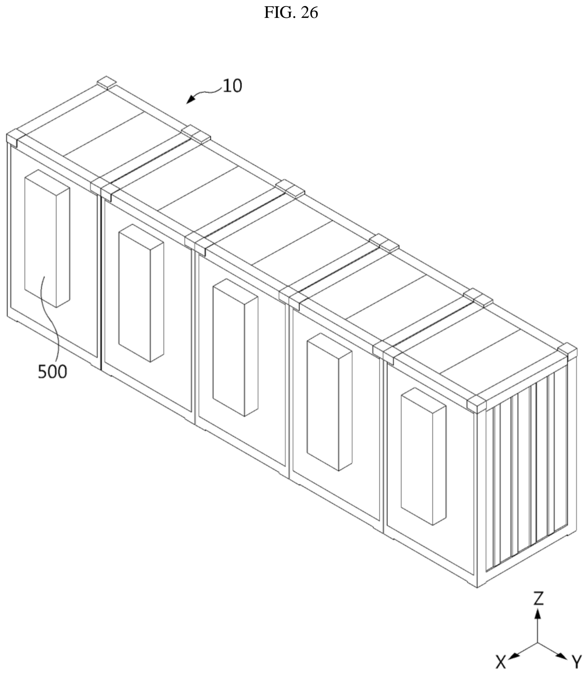

FIG. 26 is a view showing a container according to an embodiment of the present disclosure. Referring to FIG. 26, the container system may include a plurality of container modules 10. The plurality of container modules 10 may be physically or electrically connected.

The case 100 may be configured to be stacked or coupled to the case 100 of other container modules 10. Additionally, the container system may further include a control module. The control module may be fastened, coupled, connected, stacked, or fixed to the side panel 120 of the container module 10.

The control module may be electrically connected to the plurality of container modules 10 included in the container system. The control module may control the charging and discharging of the plurality of container modules 10. Additionally, the control module may obtain state information of the plurality of container modules 10.

In addition, the container system may be configured to further include a firefighting module for controlling thermal events.

An energy storage system (ESS) according to the present disclosure may include a container module 10 according to the present disclosure. The energy storage system may include a plurality of container systems. And, the container system may include a plurality of container modules 10. This energy storage system may configure a link group in combination with a certain number of container modules 10 and control modules 20.

Meanwhile, the terms indicating directions as used herein such as upper, lower, left, right, front, and rear are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

## Claims

1. A container module comprising:
a case providing an internal space and comprising a rear panel;
a battery array comprising a plurality of battery packs positioned inside the case and stacked in the vertical direction;
a cooling unit providing cooling air to the inside of the case; and
a duct positioned inside the case and allowing a gap between the battery array and the rear panel to communicate with the cooling unit.

2. The container module according to claim 1,
wherein the case comprises a front panel, and
the cooling unit is installed on the front panel.

3. The container module according to claim 1,
wherein the duct is positioned above the battery array.

4. The container module according to claim 1,
wherein the duct comprises:
a front part communicating with the cooling unit and guiding the cooling air upward; and
a rear part extending from the front part along the front-rear direction and guiding the cooling air in the front-rear direction.

5. The container module according to claim 1,
wherein the duct comprises an outlet that extends long along a gap between the battery array and the rear panel.

6. The container module according to claim 1, further comprising:
a first flow guide that is positioned inside the duct, extends along the left-right direction, and guides the cooling air in a downward direction.

7. The container module according to claim 1, further comprising:
a second flow guide that is positioned inside the duct, extends along the front-rear direction, and distributes the cooling air in the left-right direction.

8. The container module according to claim 1,
wherein the case comprises a side panel,
wherein the container module further comprises:
a side cover that is positioned between the side panel and the battery array and covers one side of the battery array.

9. The container module according to claim 1, further comprising:
a rear cover that is positioned between the rear panel and the battery array, covers the rear of the battery array, and has a plurality of supply holes.

10. The container module according to claim 9,
wherein the duct communicates with a gap between the rear cover and the rear panel.

11. The container module according to claim 9,
wherein the plurality of supply holes comprise a first supply hole and a second supply hole positioned below the first supply hole,
wherein the first supply hole is formed larger than the second supply hole.

12. The container module according to claim 9,
wherein the plurality of supply holes comprise a third supply hole and a fourth supply hole positioned further inward than the third supply hole,
wherein the third supply hole is formed larger than the fourth supply hole.

13. A container system comprising a container module according to any one of claims 1 to 12.

14. An energy storage system comprising a container module according to any one of claims 1 to 12.
